# EUROPEAN PATENT APPLICATION

(11) **EP 2 868 455 A1**
(43) Date of publication of application: **06.05.2015**
(21) Application number: 13191336.0
(22) Date of filing: 04.11.2013
(51) Int. Cl.: B29C 45/73

(54) **A method for injection molding plastic parts by means of an injection molding machine.**

(71) Applicant: Plastics Unbound Ltd, Dubai (AE)
(72) Inventor: Axelsson, Robert, 56391 Gränna (SE); Franksson, Olof, 182 32 Danderyd (SE)
(74) Representative: Holme Patent A/S

(57) **Abstract**

The steps of the injection molding method comprises (a) fitting the injection molding machine with an injection mold defining one or more molding cavities, at least one of the mold plates are provided with one or more channels for circulation of a tempering medium, (b) providing a feed of plastic material having a first temperature within the processing window, (c) heating molding cavities to a second temperature within the processing window circulating through the one or more channels a first tempering medium having a third temperature, (d) injecting plastic material having the first temperature into the closed heated mold to fill the molding cavities, (e) cooling at the molding cavities of the filled closed injection mold to a fourth temperature below the first temperature until at least partly solidification of the molded plastic parts by circulating through the one or more channels a second tempering medium having a fifth temperature, (f) opening the injection mold by parting the injector plate from the ejector plate, (g) ejecting the at least partly solidified molded plastic parts by actuation of ejector pins of the ejector plate, and (h) repeating the cycle of steps (c) - (g).

## Description

The present invention relates to a method for injection molding plastic parts by means of an injection molding machine, in particular a method for injection molding thermoplastic polymers of any kind to any shape.

A conventional injection molding machine for medium and large scale manufacturing of plastic parts has a granular plastic feedstock material injection wherefrom plastic feedstock material is conveyed slowly towards an injection gate of an injection mold, e.g. using a conveyor screw or plunger. On its way to the injection gate the plastic feedstock material passes through a heating system so that it melts and can be injected under high pressure into the injection mold.

The molten plastic is injected in a shot, which is the volume needed to fill the mold cavity, compensate for shrinkage, and provide a cushion to transfer pressure from the conveyor system to the mold cavity. When enough material has gathered at the injection gate, the molten plastic is forced at high pressure and high velocity to run along sprue bushings/runners into the one or more cavities of the injection mold. These molding cavities of the injection mold are defined between an injector plate and a closely contacting opposite ejector mold plate that together delimit one or more molding cavities and confine the injected volume of melted plastic. Pressure is maintained until the sprue at the injection gate solidifies so that no more material can enter the one or more cavities. Then the screw or ram of the conveyer system reciprocates the same distance as the screw or ram travelled forward when filling the one or more mold cavities, and acquires plastic material for the next cycle while the plastic material within the mold cools and solidifies so that it can be ejected in a dimensionally stable state. Such a conventional injection molding machine is e.g. known from International patent application no. WO 2012/055872. Solidification is often assisted by means of cooling lines in the mold. A cooling medium, such as water or oil, circulates the cooling lines to achieve appropriate cooling. The mold is kept cold during shot injection so that solidification of the molten plastic feedstock material starts almost instantaneously at the beginning of filling the one or more molding cavities, the one or more molding cavities being identical or different. Once the required cooling temperature has been reached, the mold opens and ejector pins ejects/eject the solidified part(s) from the injection mold, and the process is repeated.

International patent application no. WO 2003/11550 discusses the most common ways to reduce the time required for the molding cycle. One stated way is to keep the temperature of a mold low to reduce the time required for cooling, however the disadvantages of this is that the surface quality of the molded part is worse than if slow cooling is allowed. Fast cooling also induces large residual stress in the molded part. So cold molding is not suited when molding e.g. thin parts along a long flow path. Such a resulting molded part are often uncomplete. A further problem is that too rapid cooling of a molded part within a cold mold can prevent crystallization of the resulting product thus deteriorating the quality of the final part.

WO 2003/11550 speaks against a system where a cooling fluid is circulated alternately after circulating a heating fluid during a molding cycle, stating that such a machine and apparatus is quite complex, and also that the time required for a molding cycle becomes longer. Instead an integrated cooling shell is provided. The molding cycle involves injecting the feed at high pressure, as in other conventional methods and injection molding machines, and thus involves the resulting associated disadvantages, such as high pressure in the closed filled injection mold and need for high clamping force. Furthermore, the process requires considerable power consumption for both induction heating and for circulating cooling fluid, which contributes to making final molded parts very expensive. The use of specific layers and the induction heating also results in the molds wearing down fast.

Injection molds are generally made from tool steels, although stainless steel molds and aluminium molds are known to be suitable for certain applications. Aluminium molds may though be preferred for low volume applications in conventional injection molding machines since mold fabrication costs are low and mold manufacturing time fast. It is e.g. known from German patent application no. DE 3017559 to use aluminium for a part of an injection mold, but not for the complete injection mold. For high volume production steel molds are better than aluminium molds because steel are not similarly prone to wear, damage, and deformation during the injection and clamping cycles, as aluminium. So mold materials are selected in view of duration, acceptable wear, the molds susceptibility to expansion when subjected to thermal fluctuations and changes, and to the plastic material intended to be used with it.

Regarding the plastic feedstock material, some plastic materials are very stiff, and it will require more injection pressure to fill the mold with such a material than with less stiff materials, thus more clamping force to hold the mold parts in closed contact. Thermoplastics materials are particularly suited for injection molding due to their ability to soften and flow upon heating.

It is the aim of the present invention to remedy at least some of the above disadvantages of prior art injection molding machines and methods, and to provide alternative methods and machines.

In a first aspect of the present invention is thus provided an injection molding method in which no significant clamping and/or locking force, injection pressure and/or injection speed is needed when injecting the melted plastic material.

In a second aspect the present invention provides a versatile plastic injection arrangement associated with the injection mold.

In a third aspect the present invention provides a method in which molded plastic parts with very high qualities and mechanical properties are easier to mold than when using conventional injection molding machines and methods.

In a fourth aspect the present invention provides a method in which material waste is reduced compared to conventional injection molding methods.

In a fifth aspect the present invention provides an injection molding method by means of which it is possible to make very thin-walled and/or geometrically complex plastic parts.

In a sixth aspect the present invention provides an injection molding method by means of which visually acceptable plastic parts can be made.

In a seventh aspect the present invention provides an injection molding method by means of which several different plastic parts can be made concurrently in an injection mold in one and the same injection molding cycle.

In an eight aspect the present invention provides an injection mold for the method and machine according to the present invention.

Within the context of the present invention an injection cycle is to be understood as a complete, repeating sequence of operations for injection molding a plastic part. The cycle time is the time required for such a cycle, including return of the machine and system to repeat the molding of a further part. The injection mold is the tool having one or more molding cavities, for one or more parts to be molded. The parts may be identical or different, as in a family mold. A cavity or a molding cavity is defined by opposite depressions, or set of depressions, in the mold halves. The depression forms the outer surfaces of the molded article, part or component.

An injector plate of the injection mold defines one of the mold halves. The injector plate is secured to a stationary clamping platen of an injection molding machine. An ejector plate of the injection mold is the opposite mold half. The ejector plate is secured to a moveable clamping platen, moveable by means of e.g. a hydraulic ram. The clamping platens applies a clamping force that keeps the injection mold halves close together during the molding cycle in response to the injection pressure exerted during injection the melt/fluid plastic material into the one or more molding cavities and exerted by the injected melt/fluid plastic material confined inside the closed injection mold. The injection mold may be fitted with one or more cores, constituted by objects or protrusions able of forming holes and inner surfaces of the molded parts. Cores may be a permanent part of a cavity or be retractable. Retractable cores are used when molding parts in molding cavities not perpendicular to the direction in which the part is ejected from the mold. Retractable cores are automatically pulled from the mold prior to the mold opening and reinserted when the mold closes again and prior to injection.

The ejector plate is part of an ejector assembly having various ejector means, including ejection pins, - i.e. rods, pins or sleeves that push a molded part off of a core or out of a cavity of a mold -, ejector return pins, - i.e. projections that push the ejector assembly back as the mold closes -, and an ejector rod, i.e. a bar that actuates the ejector assembly when the injection mold opens. The operation and function of the ejector assembly are as in conventional injection molding machines and methods, and will not be discussed further in the present application.

The injector plate may have more than one gates serving as a channel through which the softened or melted plastic material flows into the cavity, including but not limited to a sprue gate for a sprue defining the passageway through which softened or melted plastic material flows from the injection nozzle to the mold cavity or runner system. The term sprue is often also used for the solidified plastic stalk of plastic left over from cutting the solidified molded part from the runner or sprue. A direct gate feeds directly into the one or more mold cavities. An edge gate is the entrance to the molded part from the runner located on the parting line of the mold halves. More than one direct gate or edge gate may be present in the present invention.

Runners in an injection mold are the feed channels, which connect the sprue with the direct cavity gate. The term runner is sometimes also used for the plastic piece formed in this channel. Runners may be hot-runners so that in the mold halves the runners are insulated from the molding cavities and are kept continuously hot.

Within the context of the present application the terms "processing window" or "processing window of a plastic material" can be used interchangeable and are to be understood as the temperature interval ranging from onset of glass transition until the start of degradation of the plastic material. The "processing window" or "processing window of a plastic material" include the melting temperature of a plastic material and the glass transition temperature interval. The "processing window" or "processing window of a plastic material" differs from plastic material to plastic material, and providers and suppliers of plastic material provide datasheets with information of said "window". Some plastic feed materials consist of more than one plastic component and are composite materials utilizing the different chemical and physical properties of the individual plastic components in conjunction or in synergy. New plastic materials and plastic composites are developed all the time. It is important to observe and related to the information in the datasheets.

The term "tempering medium" is used for a fluid selected from gases or liquids suited to hold a selected temperature for a time suitable to exchange thermal energy with the injection mold. Electric current and electromagnetic fields are excluded as "tempering medium", and thus also for heating any part of the injection mold by means of induction, except for any heat runner or core.

The novel and unique whereby the above and other aspects are achieved according to the invention is that the method comprises the steps of
(a) fitting the injection molding machine with an injection mold defining one or more molding cavities, the injection mold includes an injector mold plate and a reciprocating ejector mold plate, wherein at least one of the plates are provided with one or more channels for circulation of a tempering medium,
(b) providing a feed of plastic material having a first temperature within the processing window of the plastic material,
(c) heating at least the one or more molding cavities to a second temperature within the processing window of the plastic material and maintaining the injection mold in closed condition at said second temperature by circulating through the one or more channels a first tempering medium having a third temperature,
(d) injecting the plastic material having the first temperature into the closed heated mold to fill the one or more molding cavities,
(e) cooling at least the one or more molding cavities of the filled closed injection mold to a fourth temperature below the first temperature until at least partly solidification of the molded plastic part(s) inside the injection mold by circulating through the one or more channels a second tempering medium having a fifth temperature,
(f) opening the injection mold by parting the injector plate from the ejector plate,
(g) ejecting the at least partly solidified molded plastic part(s) by actuation of ejector pins of the ejector plate, and
(h) repeating the cycle of steps (c) - (g) until the desired number of plastic parts is produced.

Disfiguring marks on an injection molded part are almost unavoidable in conventional injection molding methods. Such marks can e.g. be parting lines on the molded part indicating where the two halves of the injection mold met in closing, flashes, i.e. leafs of plastic material leaking out from the molding cavity, or sprues resulting from the feed opening provided in the injection mold between the injection nozzle and the one or more molding cavities and/or the runner system, gate marks occurring at the gate of the channels through which the molten plastic material flows from the runner into the one or more molding cavities, or ejector pin marks being residual marks on the molded part caused by the profile of the ejection pin. Flashing may e.g. result from misalignments and clearances of mold plates, and/or from dimensional differences of the mating surfaces of the molding cavities when in the closed position of the injection mold being in contact with the injected plastic material. In conventional injection molding machines dimensional differences are e.g. occasioned by non-uniform, pressure-induced deformation during injection, machining tolerances of the injection mold, and non-uniform thermal expansion and contraction of the mold halves, which experience rapid cycling during the injection, packing, cooling, and ejection phases of the injection molding cycle. Since such marks are almost unavoidable the solution hitherto have been to design the injection mold halves in such a way that the marks are made at areas, which are visually hidden in use of the final molded part.

By means of the method according to the present invention disfiguring and detriment marks can be avoided to a large extent due to the injection mold already being heated to the second temperature. At the time the plastic material at the first temperature is injected in the closed injection mold, said plastic material is in a soft, viscous and processable condition, e.g. as a melt, and the injection mold is at the second temperature, which is also within the processing window of the plastic material. This way premature solidification of heated plastic material in gates, sprues or runners, and any of the one or more molding cavities, is prevented. The hot plastic material flows almost by itself into the one or more molding cavities without the need of applying injection pressure and/or clamping force even close to the levels of conventional injection molding methods. This counters the problem with plates being unintentionally forced apart thus inducing disfiguring flash on the parts molded. The low force also enables the use of more elastic mold materials, and weaker locking arrangements on the molding machine. The pressure exerted by the plastic material on the face of the injection screw or ram when injecting plastic material into the injection mold is low and friction reduced compared to conventional injection molding methods and machines. Also the injection molding pressure, thus the pressure applied to the screw to press and to force the plastic material at the first temperature in a ram to completely fill the one or more molding cavities, is smaller than in conventional injection molding methods and machines. Ram is to be understood as the forward motion of the screw inside the feed barrel to force the plastic material at the first temperature through a nozzle into the one or more molding cavities via gates, sprues and runners. The runners may for example be hot-runners, so that scrap formation is further prevented.

By means of the method according to the present invention plastic part(s) can be manufactured without at least one or more of removal of sprues, floating lines on the plastic part, meeting lines in the plastic parts behind tool cores, and tension in molded plastic parts. Due to the flowability in the hot injection mold of the soft, viscous plastic material at temperatures within the processing window a very homogeneous and rapid distribution of plastic material, e.g in form of a melt, into the one or more molding cavities, takes place almost by itself, and the so obtained final injection molded part(s) solidify uniformly and are not susceptible to warpage, i.e. distortion caused by non-uniform internal stresses.

The provision of the one or more channels in the injector plate, which constitutes the stationary mold half, and/or in the ejector plate, which constitute the movable mold half, makes it possible to circulate a hot or a cold tempering media, respectively, to keep the favourable alternating temperatures of the injection mold, namely first hot during the injection of the plastic material, and then cold for solidification of the molded part(s) in the one or more molding cavities to complete an injection cycle. This way, contrary to the teaching of the prior art, is achieved an inexpensive, simple but still controlled way of adjusting the temperature of the injection mold to any preferred temperature.

The second temperature may in any preferred embodiment be equal to or higher than the first temperature, although the invention will work for some plastic materials even if the second temperature is below the first temperature but within the processing window of the plastic material. In any preferred embodiment the fifth temperature can also be lower than the third temperature, even lower than the lowest temperature of the processing window of the plastic material, and/or the fourth temperature can be below the lowest temperature of the processing window of the plastic material. The lowest temperature of the plastic material is the glass transition temperature and the highest temperature is the temperature at which the plastic material starts to degrade. Proper selection of any of the first, second, third, fourth and fifth temperatures is done based on the material providers data of the processing window of the selected plastic material in view of possible processing conditions to obtain the high quality plastic part(s) of the present invention, thus plastic part(s) having the desired design, exact measures, dimensions and shapes, and no or limited disfiguring marks at the lowest possible manufacturing time and costs.

It might be preferred in steps (e) and (g) that the molded plastic parts proceed to almost complete or fully complete solidification prior to being ejected. This way is ensured that ejector pin(s) do not make undesired marks on the molded part. Some plastic materials may however prior to complete solidification reach a partly solid state in which the molded part has a temperature below the processing window and can be ejected for final solidification outside the injection mold without loss of intended shape and design, and without marks or depressions from contact with ejector pins. Ejecting molded part(s) even prior to complete solidification increases manufacturing speed and rate, and reduces manufacturing costs.

Melt viscosity increases with molecular weight, and consequently the injection pressure and molding pressure normally required in conventional injection molding methods and machines to fill any particular geometry of a molding cavity increases with plastic materials that have a very high molecular weight.

Thermoplastics are particular suited for use in the injection molding method of the present invention, and simply by adjusting the first, second, third, fourth and fifth temperatures appropriately, molecular weight can expediently be taken into consideration.

Delrin® obtainable from DuPont is a first example of plastic polymers for use in the present invention. Delrin® acetal resins are semi-crystalline, thermoplastic polymers made by the polymerization of formaldehyde, also commonly referred to as polyoxymethylene (POM). According to the datasheet (DuPont™ Delrin® acetal resin, TECHNICAL INFORMATION) Delrin® has very low amorphous content making the effect of glass transition temperature Tg negligible and very difficult to measure. For Delrin® acetal homopolymers the melting temperature Tm is 178°C and the recommended typical processing window is 210-220°C, within which the first temperature can be selected as.

Further examples include polypropylenes e.g. obtainable from INEOS Olefins & Polymers USA, 2600 South Shore Boulevard, League City, TX 77573. According to the material providers datasheet (INEOS Olefins & Polymers USA, Polypropylene Processing Guide) the polypropylenes are semi-crystalline polymers with a recommended processing window of 204 - 268°C.

Yet further examples are the high temperature amorphous thermoplastics sulfone polymers obtainable from Solvay Speciality Polymers USA, LLC, 4500 McGinnis Ferry Road, Alpharetta, GA 30005-3914, USA. According to the material providers datasheet (Processing Guide, Radel® PPSU, Veradel® PESU, Udel® PSU, Acudel® modified PPSU). The recommended processing window is 138- 350°C.

The above examples constitute a non-exhaustive list of examples of resins and plastic materials suited for use in the present invention.

In the method according to the present invention there is no need to increase injection pressure and molding pressure excessively to cope with high molecular polymers and the method according to the present invention is not limited to specific thermoplastic polymeric materials. The injected plastic material and the injection mold typically are at substantially same temperature when the molding cavities are filled, to keep the plastic material in same state, and irrespective of which kind of plastic polymeric material to be processed, the temperatures of the present invention are chosen carefully to make sure that viscosity, plasticity and flow properties are optimized, and thus satisfactory and sufficient for the plastic material, which has a temperature within the processing window, to easily distribute into the one or more molding cavities. The first temperature, the second temperature and/or the third temperature is(are) regulated and controlled to prevent unintentional temperature drop(s). First after completion of the shot, the injection and filling of the one or more molding cavities, the temperature of the injection mold is lowered to the fourth temperature by circulating the second tempering medium at the fifth temperature through the one or more channels. So the temperatures of the method are conveniently preset according to the properties of the plastic material. The present invention reduces or even completely eliminates the need for high pressure application. Since the temperatures of the first and second tempering medium can be controlled distanced from the injection mold said temperatures are both fast and easy to adapt to various different processing windows of various different plastic materials.

The one or more channels may preferably be provided in the vicinity of the one or more molding cavities, preferably so close to the molding surface of the one or more molding cavities that high thermal flux and conduction of thermal energy between the molded part(s), the tool material of the injection mold and respective first and second tempering medium, takes place fast, efficient and in a homogenous manner.

Even complicated molded part(s) can be made at no extra effort due to the superior management of thermal energy and heat exchange of the injection mold, the tempering mediums and the plastic material in accordance with present invention.

As examples of complex molded parts which hitherto not have been possible to manufacture in a conventional injection molding method at high numbers at low costs can be mentioned:
- tube-formed parts with circular cross-sections. The tube-formed parts will actually be circular, whereas infallibly all tube-formed parts made in conventional injection molding methods and machines will have partly oval cross-sections,
- box-shaped injection molded plastic parts will not have their walls shrink-bending inwards towards the centre of the box,
- it is possible to make injection molded plastic parts having long narrow holes, because it is possible to use long thin tool cores with only one end fixation, although two-end fixation also is possible, and
- injection molded parts that are asymmetric and thus require molding cavities that are centreline-asymmetric can be made without gasping/leaking/venting features.

A further advantage by having an injection mold at a second temperature at the time it receives the shot of plastic material at the first temperature is that it makes it possible that the injection mold has an off-centred injection gate. Inevitable, the soft plastic material at the first temperature will flow unobstructed irrespective of the location of the injection gate, so an off-centered injection gate functions quite as well as a centred injection gate. Thus the invention is substantially independent of location of gate, which gate may even be adjustable, or there could be more than one injection gate. So the tool manufacturer has a substantial level of freedom to choose where to place the in-molding point, i.e. the gate running to a cavity, and an injection mold can be fitted on various injection molding machines.

The provision of the one or more channels in the injector plate and/or the ejector plate results in that the molded plastic part(s) can be homogeneously heated and cooled during a molding cycle. The final molded plastic part(s) will have equal shrink fraction in all directions, i.e. isotropic shrinking, so that the shape of the molded part(s) mirror the shape of the one or more cavities exactly, and makes it possible to make e.g. good spheres and holes with more circular cross-section.

In a highly preferred embodiment of the method according to the present invention step (c) may further include heating the conveyor system for the feed of plastic material at any location upstreams the injection mold to a temperature within the processing window of the plastic material, e.g. the first temperature or higher. In this embodiment the clamping force and clamping pressure applied to the injection mold to keep it closed during the injection step (c) and the molding cycle of steps (c) - (g) are both lower than for conventional injection molding methods and machines. The fluid pressure of the plastic material within the one or more molding cavities and the runner system, are also low due to the first and second temperatures being selected within the processing window of the plastic material. So any fluid pressure of the plastic material at the temperature within the processing window need only be compensated to minor extent by a clamping force and clamping pressure of an injection molding machine including a conveyer system configured so that the temperature of the plastic material feed is raised during conveyance and is at the first temperature when the feed reaches the injection gate of the also heated closed injection mold. The closed injection mold may e.g. have substantially same temperature as the incoming flow of plastic material feed.

Due to low clamping pressure, clamping force and fluid plastic pressure in the closed injection mold, wear of the injection mold halves and flashing, i.e. leakage of plastic material from a cavity, are reduced substantially. One or both of the injector plate and the ejector plate can e.g. be made of a material such as aluminium or an aluminium alloy, which normally not is suited for high production numbers in conventional methods due to very fast wearing of the injection mold and lack of dimensionally stability. Since the injection mold and plastic feed both are hot, the cycle time is so short that an injection mold of aluminum is cooled prior to loosing dimensional shape. The choice of aluminum as tool material have no or only inferior impact on dimensions and shapes of the one or more molding cavities, and therefore same applies to the resulting molded parts. Aluminum will also provide for high thermal conductivity between cavity and tempering medium, and is easy to machine when manufacturing the mold. The higher the thermal conductivity of the mold/tool material is the better the mold is to acquire the temperature of the circulating tempering medium. The thermal conductivity of stainless steel is 16 W/(m°K) whereas aluminum has a thermal conductivity of 225 W/(m°K), and copper a thermal conductivity of 392 W/(m°K). The corresponding Elastic modulus' of steel is 200 GPa, Aluminum 69 GPa and Copper is 117 GPa. But although aluminium and copper has lower Elastic modulus' than aluminium or copper, and the mold plate thus are be less able to e.g. holding back locking forces etc., this fact does not constitute a problem because high locking force is not a requirement.

In step (d) the injection of melted plastic material can be made at an injection pressure as low as less than 100 kg/cm², preferably less than 80 kg/cm², more preferred less than 60 kg/cm², and even more preferred at an injection pressure of between 20 - 50 kg/cm². Conventional injection molding methods require an injection pressure of 600-700 kg/cm², which is about 15- 30 times higher and therefore more expensive, requires more energy, and causes earlier onset of wear of injection mold and injection mold machine parts.

Cold creep is often seen in conventional injection molding methods. Cold creep creates weld marks and meeting lines, in particular behind cores or core parts. Because the entire injection mold according to the present invention is maintained at a temperature within the processing window until the softened plastic material has combined into a homogeneous mass behind cores, and complete filling of runner system and the one or more molding cavities has taken place, no onset of solidification can take place too early to create cold creep, weld marks and meeting lines.

The first tempering medium has a good heat capacity so that it is able to be keep at least a third temperature within the processing window of the plastic material, and to hold this third temperature for the injection and distribution stages of the molding cycle, thus at least for the duration of steps (c) and (d). The third temperature may e.g. be at least the glass transition temperature of the plastic material, such as at least 200°C, or even at least 300°C. Lower temperatures of the first tempering medium may however be used in case the selected plastic material has a corresponding lower demand for application of thermal energy in order to make it processable within its processing window to an acceptable level. For producing polyvinyl chloride parts app. 140 - 180°C may e.g. be sufficient. The first tempering medium circulating in the one or more channels can preferably be an oil, although other fluid tempering media, being liquids, such as water, or gases, also are contemplated by the present invention. The suitable firs and second tempering media are selected to have a heat capacity sufficient to carry thermal energy to at least the mold cavities and from at least the molded part, respectively to manufacture molded parts at high speed without compromising physical and mechanical properties of the final molded part. The skilled person is aware that tests and trials may be needed to establish optimum process parameters for a given injection molding task.

The first tempering medium and the second tempering medium can be circulated through the same or different one or more channels, optionally in response to opening and closing one or more valves associated with respective inlets for the one or more valves.

In case the first and the second tempering medium are circulated through different one or more channels the second tempering medium could be any inexpensive tempering medium, including water or gas.

The hot first tempering medium may circulate in first one or more channels different from second one or more channels for cooling by the second tempering medium. This one embodiment is suited if the runner system is intended to be heat-runners.

Any tempering medium having suitable thermal properties and ability to circulate the one or more channels can, as stated above, be used, including gases and liquids. The third and fifth temperatures of the respective first and second tempering medium are chosen in dependency of the first, second and third temperatures, and in dependency of the required and desired solidification rate and speed. Selected temperatures may influence on molding cycle time.

Injector plates with an off-centre injector gate is within the framework of the present invention. Due to the ease of flow and fast distribution of plastic material in the runner system and the one or more molding cavities, which plastic material has a first temperature within the processing window, the location of the injector gate and nozzle is not critical to obtain even and fast distribution of heated plastic material inside the one or more cavities of the injection mold. Such an injector plate may even be used with different injection molding machines, without the need to take special precautions to nozzle location or need to make a special design of tool. The plastic material, which has a first temperature within the processing window, can even be directed to a gate of preference to fill a certain cavity prior to another. More nozzles, more injector gates and more edge gates are also a possibility, which enables injection in several molding cavities at the same time. The injection mold may even be divided into two or more independent sections having each their nozzles and individual injector gates. In such an embodiment different plastic materials, e.g. having same thermal properties, can be injected in each their section, and one kind of part, or different kinds, or set of parts be manufactured simultaneously.

The invention also relates to an injection mold including an injector mold plate and a reciprocating ejector mold plate.

These two plates define one or more molding cavities in the closed state of the injection mold. At least one of the plates has one or more channels configured for
- during injection of plastic material, which is at a first temperature within the processing window of said plastic material, circulating in the one or more molding cavities a first tempering medium having a third temperature of at least a temperature within the processing window of the injected plastic material to heat the one or more molding cavities to a second temperature, and
- for at least partly solidification of the molded plastic parts inside the injection mold circulating a second tempering medium having a fifth temperature temperature selected for cooling at least the one or more molding cavities of the filled closed injection mold to a fourth temperature below the first temperature.

The fifth temperature may conveniently be lower than the third temperature to ensure the solidification. Optionally the fifth temperature is lower than the lowest temperature of the processing window, which fifth temperature is reached at the end of an injection molding cycle.

The one or more channels may in a preferred embodiment encircle the one or more molding cavities close to said molding cavities to enable very rapid heat exchange between tempering medium and plastic material in the one or more cavities, and thus to obtain fast molding cycle time.

The one or more channels may have same or individual inlets for a tempering medium depending on if the first and second tempering media are compatible, and if their respective heat capacities remain unaffected by a minor mutual dilution.

One or more valves may be associated with the one or more channels as a means for switching between circulation of the first tempering medium and the second tempering medium to heat and cool, respectively, relevant sections of the injection mold or the entire injection mold during an injection molding cycle. The control of the third and fifth temperatures can be made using e.g. a separate exterior heat exchanger or any other heating/cooling arrangements. A shunting valve mixing cooling and heating tempering medium, if compliant, can be used instead of or as a switching means to achieve intermediate temperatures, or temporal transitions, such as gradients.

A preferred injection molding machine for use in the above-discussed injection molding method may comprise
- the above described and configured injection mold,
- a heating system for heating a conveyor system for the feed of plastic material at any location upstream the injection mold to at least a temperature within the processing window of the plastic material,
- a pump arrangement for in turns circulating the first tempering medium having a third temperature and the second tempering medium having a fifth temperature through the one or more channels of the injection mold, and
- a valve system for controlling the switching between first and second tempering medium.

By also heating the conveyor system of the injection molding machine to at least a temperature within the processing window of the plastic material, such as the first temperature, the susceptibility of temperature fluctuations of the injection mold in response to injection of plastic material in the closed mold are substantially reduced. The rheological properties of a plastic material at a temperature within the processing window are expediently utilised during conveyance, injection and distribution inside the one or more molding cavities and runner system. The time interval for the screw to rotate, or a ram to create a shot, and return to original position, i.e. the recovery time, are also shorter than if solid feed are conveyed through a long part of the screw or ram barrel.

Clamping force and injection pressure can be kept at a minimum due to injecting low-viscous, fluid plastic material in the injection mold. Frictional wear of at least the barrel, screw and/or ram, and any other components of the molding tool, and wear of the machine in general, are also reduced even further when operating with the plastic material as a low viscous fluid during the entire length of the injections molding machine, and for the entire part of the molding cycle, and until the first tempering medium is exchanged in the one or more channels with the second tempering medium to initiate solidification. Lifetime of both injection mold and injection molding machine is generally prolonged compared to conventional injection molding machines operating at the high injection pressures mentioned above. Parameters of the conventional injection molding methods and machines causing disfiguring marks and tension in the final molded part are eliminated, or at least reduced to an insignificant minimum. So when using the method and machine of the present invention the tool designer has considerable freedom to design the tool parts of the injection mold because less disfiguring marks on the final injection molded part need to be hidden for the consumer's eye.

Due to the provision of the pump arrangement and valve system very effective cooling of the injection molded part(s) can be achieved. The cooling gradient over the area of the injector plate is held substantially constant. No undesired differential cooling due to one area of the molded part cools at a highly different rate can occur, nor will any of the mold surfaces have different temperatures. So warping, which can result from differential cooling, is not a problem. If the surface of a finished injection molded part begins to separate into layers due to said layer having being cooled one after the other strata or fish-scale-type appearances may suddenly become visible, however since differential cooling through the thickness of the injection molded part does not takes place in an injection molded part manufactured according to the present invention there is no risk of making an injection molded part that delaminate either. The injection molded part(s) obtained by the injection molding method and injection mold of the present invention have no evident striations or other marks on the molded-part surfaces that indicate melt flow directions or impingement.

The system for alternate heating and cooling of the injection mold of the present invention also provides for dimensional stability of the final injection molded part(s). The precise shape of the part(s) is retained and corresponds to the shape of its associated injection molding cavity, so the final injection molded part is almost congruent with its injection molding cavity.

The present invention also relates to molded part(s) made using any of the method, and/or the injection mold, and/or the injection molding machine described above. Some examples are given below. Emphasise is made that these examples are examples of complex parts normally problematic to manufacture at low costs and high speed using conventional injection molding methods and machines. The examples are thus not an exhaustive list.

Shrinkage is little and an injection molded part being as thick as 4 cm can be cooled without loss of dimensional stability and changes in transparency. In case of manufacturing thicker injection molded objects, heating and cooling can simply be made from both the ejector plate mold half and the injector mold half, respectively, to obtain a final solid molded unit having a thickness of up to about 8 cm.

It is also possible to injection mold a perfect transparent sphere. The sensitive cooling system and method of the present invention allows the softened plastic to solidify without crystallisation, which would make e.g a solid sphere becomes opaque, as often seen in conventional injection molding methods.

The injection molding machine may advantageously further comprise an electronic operating system controlled by a computer programme for controlling the continuous injection molding cycle for obtaining a plastic part, preferably a thermoplastic part.

It is also possible to injection mold multiple different plastic parts in one and the same injection mold in one injection molding cycle. The low pressure and high temperature during injection allows unbalanced filling of the one or more cavities and of any areas of those without inducing the skewed mold mechanical load or leakage present in conventional injection molds and methods. For families of parts this provide for significantly lower costs - one mold only, and thus only one injection mold cycle for each set of parts, for the entire family.

It should be understood that any features described in relation to the injection molding method can be implemented in any of the injection molding machine and the injection mold and vice versa.

A summary of the features of the invention and its advantages in view of the prior art are provided below.

The prior art injection molding methods and apparatuses do not propose substantially use of no or low pressures of the plastic material in feeds and cavities, controlling the various temperatures, do not keep up the temperature high for all the plastic material in the one or more cavities during injection, do not keep up the temperature low for all the one or more cavities during cooling, do not propose that a cooling medium is circulated alternately after circulating a heating medium during an injection molding cycle.

In contrast thereto the present invention provides an alternative injection molding method in view of obtaining increased productivity and low manufacturing costs, to take up competition with low cost manufacturers of injection molded components. The present invention advantageously allows for manufacturing of injection molded parts of improved quality and having improved properties in view of same plastic parts made using conventional injection molding methods and machines, which require or induce at least one or more of removal of sprues, floating lines on the plastic part, meeting lines in the plastic parts behind tool cores, and tension in plastic parts.

The injection molding method and machines of the present invention utilizes a novel injection mold suited for temperature cycling of just one injection molding cavity, all cavities or the whole injection mold and/or feed channel too. This way substantially no or low pressure prevails in the one or more cavities of the injection mold during a molding cycle, i.e. no conventional injection molding high pressure of the plastic feed.

The present invention also enables multiple different parts to be molded in same injection mold.

Due to the cycling and fast exchange of thermal energy it is possible to make injection molds of materials having high thermal conductivity that generally are mechanically softer, and thus less capable to withstand pressure, than conventional injections molds of for example steel. A further advantage is that mechanically softer materials are easier and faster to machine, e.g. mill or cut.

Due to the low pressure in the injection mold during a molding cycle, the pressure the injection mold need to withstand without deforming or yielding can be made with less thickness of injection mold material, which decreases mold material costs and make it easier to change temperature, simply because of less material to cycle thermally.

The injection mold is provided with a simple and inexepensive heat exchange arrangement, both in view of design and manufacturing. The mold backside has an open channel patterns made by just rough milling etc, without complicated drilling and tubing.

The injection mold plate can be fitted on platens of an injection molding machine in an arrangement that is mechanically simple, is inexpensive, is small, requires low power, and in operation requires just small locking forces compared to conventional injection molds for making similar plastic parts.

Conventionally, as a compromise in the prior art, the one or more molding cavities have the same temperature during both injection and cooling. The unusual high temperature in the cavities of the injection mold according to the present invention during injection of plastic feed having a temperatures in the same range results in molded parts of improved high quality, and enables new features and properties of molded parts. Similarly the low temperature in the cavities of the injection mold during cooling gives short cooling time, without premature solidification during injection since the cavities then is rapidly cycled to high temperature again after the plastic part resulting from the injection molding cycle has been ejected from the opened injection mold. So the present inventions overcomes a prejudice in the field of injection molding against very fast cooling.

The risk that heat leaks to adjacent regions of the injection mold does not exist, because there are no such adjacent regions when the entire injection mold is heated. The heat exchange of the entire injection mold over a molding cycle is done via a simple, inexpensive system of well-distributed, designable versatile channels, the number, location ans dimensions of which can be adapted according to parameters such as the nature of the feed plastic material and the design of the intended plastic part. There is no risk of uneven or only local heating/cooling as when heat exchange is done by fluid cycling of limited areas, or induction elements installed at specific locations of the injection mold. Usable external temperature cycling arrangements are relatively inexpensive, and the same arrangement can be reused for all injection molds fitted on the platens. Moreover, it is possible to control the different temperatures very precisely from locations outside the injection mold, even from remote locations.

None of the novel and inventive injection molding machine, the injection molding method and the injection mold of the present invention are a challenge for the operator or the mold manufacturer. No new training is needed for designing the injection mold halves of an injection mold according to the invention, no new workshop machinery or skills are needed for injection mold manufacturing, and no new skills are needed for injection molding operations, all of which are needed for similar prior art methods, machines and molds making use of fluid cycling of limited areas, or use of inclusion of induction elements. The injection mold can have low weight and be easy and fast to fit.

Almost any plastic part can be injection molded using the novel and inventive technology of the present invention substantially without limitations to design of plastic parts molded, since the heating and cooling steps are undertaken in an extremely uniform way and substantially independent of the locations of the one or more cavities of the injections mold.

## Claims

1. A method for injection molding plastic part(s) by means of an injection molding machine,
wherein the method comprises the steps of
(a) fitting the injection molding machine with an injection mold defining one or more molding cavities, the injection mold includes an injector mold plate and a reciprocating ejector mold plate, wherein at least one of the plates are provided with one or more channels for circulation of a tempering medium,
(b) providing a feed of plastic material having a first temperature within the processing window of the plastic material,
(c) heating at least the one or more molding cavities to a second temperature within the processing window of the plastic material and maintaining the injection mold in closed condition at said second temperature by circulating through the one or more channels a first tempering medium having a third temperature,
(d) injecting plastic material having the first temperature into the closed heated mold to fill the one or more molding cavities,
(e) cooling at least the one or more molding cavities of the filled closed injection mold to a fourth temperature below the first temperature until at least partly solidification of the molded plastic part(s) inside the injection mold by circulating through the one or more channels a second tempering medium having a fifth temperature,
(f) opening the injection mold by parting the injector plate from the ejector plate,
(g) ejecting the at least partly solidified molded plastic part(s) by actuation of ejector pins of the ejector plate, and
(h) repeating the cycle of steps (c) - (g) until the desired number of plastic parts are produced.

2. A method according to claim 1, wherein the second temperature is equal to or higher than the first temperature, and/or the fifth temperature is lower than the third temperature, optionally the fifth temperature is lower than the lowest temperature of the processing window of the plastic material, and/or the fourth temperature is lower than the lowest temperature of the processing window of the plastic material.

3. A method according to claim 1 or 2, wherein in steps (e) and (g) the molded plastic part(s) proceed to almost complete solidification.

4. A method according to any of the preceding claim 1, 2 or 3, wherein step (c) further includes heating the conveyor system for the feed of plastic material to a temperature within the processing window of the plastic material at any location upstreams the injection mold.

5. A method according to any of the preceding claims 1 - 4, wherein the plastic material is a thermoplastic material.

6. A method according to any of the preceding claims 1 - 5, wherein one or both of the injector plate and the ejector plate is made of aluminium or an aluminium alloy.

7. A method according to any of the preceding claims 1 - 6, wherein in step (d) the injection of plastic material at the first temperature is made at an injection pressure of less than 100 kg/cm², preferably less than 80 kg/cm², more preferred less than 60 kg/cm², and even more preferred at an injection pressure of between 20 - 50 kg/cm².

8. A method according to any of the preceding claims 1 - 7, wherein at least the first tempering medium can be heated to at least a temperature within the processing window of the plastic material or higher, e.g. to at least 150°C, or at least 200°C, or at least 300°C, preferably the first tempering medium is an oil.

9. A method according to any of the preceding claims 1 - 8, wherein the first tempering medium and the second tempering medium are circulated through the same or different one or more channels, optionally in response to opening and closing one or more valves associated with respective inlets for the one or more valves.

10. A method according to any of the preceding claims 1 - 9, wherein the injector plate has an off-centre injector gate, and/or one or more injector gates, and/or one or more edge gates.

11. An injection mold including an injector mold plate and a reciprocating ejector mold plate, the plates define one or more molding cavities in the closed state of an injection mold, wherein at least one of the plates has one or more channels configured for
- during injection of plastic material, which is at a first temperature within the processing window of said plastic material, circulating in the one or more molding cavities a first tempering medium having a third temperature of at least a temperature within the processing window of the injected plastic material to heat the one or more molding cavities to a second temperature, and
- for at least partly solidification of the molded plastic part(s) inside the injection mold circulating a second tempering medium having a fifth temperature selected for cooling at least the one or more molding cavities of the filled closed injection mold to a fourth temperature below the first temperature.

12. An injection mold according to claim 11, wherein the one or more channels encircles at least one of the one or more molding cavities.

13. An injection mold according to claims 11 or 12, wherein the one or more channels have same or individual inlets for a tempering medium.

14. An injection mold according to claims 11, 12 or 13 wherein one or more valves are associated with the one or more channels to switch between the first tempering medium and the second tempering medium.

15. An injection mold according to any of the preceding claims 11 - 14, wherein one or both of the injector plate and the ejector plate is made of aluminium or an aluminium alloy.

16. An injection molding machine for injection molding plastic part(s), the injection molding machine comprises
- the injection mold according to any of the preceding claims 11 - 15,
- a heating system for heating a conveyor system for the feed of plastic material at any location upstream the injection mold to at least a temperature within the processing window of the plastic material,
- a pump arrangement for in turns circulating the first tempering medium having a third temperature and the second tempering medium having a fifth temperature through the one or more channels of the injection mold, and
- a valve system for controlling the switching between the first and second tempering medium.

17. An injection molding machine according to claim 16, further comprising an electronic operating system controlled by a computer programme for controlling the continuous injection molding cycle for obtaining a plastic part.

18. A molded plastic part obtained by the method according to any of the preceding claims 1 - 10, and/or the injection mold according to any of the preceding claims 11 - 15, and/or the injection molding machine according to any of the claims 16 - 17.
